# EUROPEAN PATENT SPECIFICATION

(11) **EP 0 991 243 B1**
(45) Date of publication and mention of the grant of the patent: **28.03.2007**
(21) Application number: 99402218.4
(22) Date of filing: 09.09.1999
(51) Int. Cl.: H04L 29/06, H04L 12/28

(54) **Method for data addressing in a local area network**
Verfahren zur Datenadressierung in einem lokalen Netz
Procédé d'adressage de données dans un réseau local

(30) Priority: 30.09.1998 ES 9802033
(43) Date of publication of application: 05.04.2000
(73) Proprietor: ALCATEL, 75008 Paris (FR)
(72) Inventor: Gonzalez de Prado Diaz, José Luis, 28043 Madrid (ES)
(74) Representative: Lamoureux, Bernard

(56) References cited:
- EP-A- 0 488 823
- US-A- 5 636 216
- US-A- 5 668 952
- NAVARRO J: "DATA APPLICATIONS AND SERVICES IN WIRELESS LOCAL LOOP ACCESS SYSTEMS. ALCATEL 9800 WIRELESS ACCESS SYSTEMS OFFER USERS NOT ONLY BASIC VOICE SERVICES, BUT ALSO ADVANCED DATA SERVICES" ELECTRICAL COMMUNICATION,BE,ALCATEL. BRUSSELS,1 April 1998 (1998-04-01), pages 116-123, XP000751427 ISSN: 0013-4252

## Description

### OBJECT OF THE INVENTION

The present invention relates to a method for addressing data packets transmitted by and/or generated at a data terminal station of a user associated with a local area network (LAN).

The present invention is of special, but not exclusive, application to a local area network interconnected with other local or more extensive area networks for offering, in general, data communications (Internet) by means of a communications system that employs radio access technology, such as a wireless digital telecommunication system (DECT), and which is connected, in turn, to a node providing access to the data communication network.

### STATE OF THE ART

In a local area network (LAN), a set of client devices like computers, printers, etc., data stations in general, are connected to transmission lines, physical medium, over which they interchange data between themselves and with the area outside the LAN.

The LANs are characterised in that they are systems with low level, burst-intensive traffic. Normally, the users of the LAN establish a type of communication known as an asymmetric communication and handle TCP/IP (Transmission Control Protocol/ Internet Protocol) traffic.

To make possible the data transactions between the different stations connected to the LAN, suitable protocols have been disseminated for this purpose, as well as physical means for connection. A specific case is that of Ethernet, very similar to that to be found in the IEEE recommendation 802.3.

When a user of a LAN wishes to send an IP message to a destination on Internet (network formed by the interconnection of thousands of networks), the LAN has to set up a connection by means of an Internet services provider (ISP), which facilitates connectivity and end user services on Internet. For this connection, use is made of a router.

The router is connected on one side to the LAN through, for example, Ethernet and on the other side to a network access point (NAP) to the Internet network via the ISP.

In a wireless access environment, Wireless Local Loop (WLL), each station that constitutes the LAN (or sets of stations) is connected to a data port of a remote unit of the radiocommunications system. The set of stations so connected forms an extended LAN. Each remote unit is within the coverage area of a fixed unit with which it communicates by radio.

The fixed unit is connected in a local mode or by means of data transmission lines (e.g. frame relay) to the ISP.

The process involved in the transmission of a message consists of several steps, one of them being the allocation of a radio channel (traffic channel) to the communication. To achieve this, the remote unit hunts for a free radio channel for setting up a connection with the fixed unit to obtain access to the telecommunications network.

The data packets are transmitted over the connection that is set up. The information packets undergo a process of transformation on their route to the destination user.

The OSI model performs a hierarchisation and abstraction of the different processes, classifying them into seven distinct hierarchical levels or layers, and where each level is constituted by a layer identity, which groups together a set of functions which provide specific services for facilitating the communication.

According to the OSI model, the allocation of a radio channel to a communication is done by the medium access control (MAC) layer. The data link control (DLC) layer provides a reliable transport facility for the data packets over the radio channel. The network layer is responsible for transporting the messages between nodes of the telecommunications network and, consequently, provisions the data routes.

When the process of transmitting an Ethernet frame with an IP message in its information field is initiated, the appropriate radio resources have to be requested for its transmission.

The request for setting up these radio resources reaches the remote unit, to which it is connected, where the appearance of this message is translated into signalling of the radiocommunications system, being transmitted to the fixed unit.

These signalling messages are based on the parameters that identify the station within the radiocommunications system (remote unit identity and connection data port), as well as on the physical address (layer 1 MAC) of Ethernet, but never on the layer 3 network address (IP address), which the system does not analyse. Once the radio resources have been allocated, the IP message proceeds to the router and from there to the Internet destination.

When the fixed unit receives an acknowledgement message from the destination user, this acknowledgement message incorporates the network address (IP level 3) of the destination, which was the originator of the call, but not the MAC address of the latter, which is unknown. For this reason, a general paging call has to be sent to all the remote units that have Ethernet ports, for all of them to analyse the IP address and the remote unit in question to answer, indicating its MAC address for facilitating the rest of the transmissions.

Each remote unit has to be paged independently, with a message for each one, which includes its identity within the radiocommunications system. When the addressed units have received the paging message, they must answer. This answer on the part of all these remote units implies the hunt and negotiation for a radio channel for carrying out the transaction. This phase is known as the ARP (Address Resolution Protocol) process.

From that explained above, the process implies a needless waste of the limited radio resources available and the transmission over these of a great number of signalling messages, and in addition an increase in the operations to be performed by the software implemented in the different devices/nodes that constitute the telecommunications network is produced. In this case, all the facilities of the network suffer, producing an impairment of the communication.

Consequently, it becomes necessary to develop a method to overcome the aforementioned problems.

### CHARACTERISATION OF THE INVENTION

An object of the present invention is to provide an effective method of managing the limited radio resources of a radiocommunications system for effecting the interconnection between at least one LAN and a data communication network like Internet.

To achieve this object a method according to claim 1 and a system according to claim 3 are provided.

To this end, a fixed unit comprises segmentation means for segmenting ARP request messages into various segments of a determined number of bits, to be transmitted to a set of remote units located within its coverage area.

The segments, into which the ARP request message has been divided, are transmitted in successive data transmissions over a radio channel (pilot channel). This channel is picked up by all the remote units in a systematic manner.

The pilot channel transports the paging messages, with the identity of the fixed unit, as well as with the broadcast data, in a routine and cyclic manner.

The segments, into which the ARP request message is divided, are transmitted over the pilot channel, either inside the paging messages or inside the broadcast data. The remote units, picking up the pilot channel, receive the ARP request message, containing the IP address corresponding to a terminal station of the local area network LAN that originated the data transaction. Only the remote unit that recognises the IP address as its own, responds to the ARP request message reactivating or setting up a traffic channel for completing the connection.

### BRIEF DESCRIPTION OF THE FIGURES

A more detailed explanation of the invention is provided in the following description, based on the attached figures, in which:

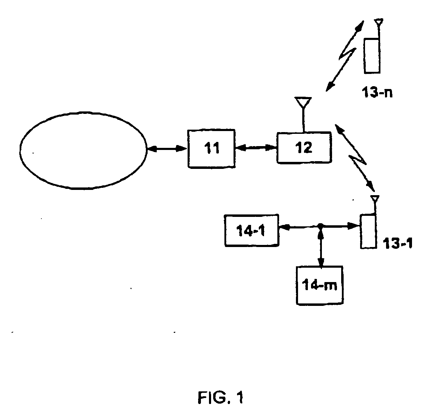

- figure 1 shows in diagram form a local area network interconnected with a data communication network through a radiocommunications system according to the invention.

### DESCRIPTION OF THE INVENTION

Figure 1 shows a preferred embodiment of the present invention, in which at least one fixed unit 12 belonging to a radio access system, is connected via transmission lines to a services provider 11 of a communications network, for example Internet, by means of which the fixed unit 12 obtains access to Internet.

On the user side, the fixed unit 12 is in communication, by means of radio technology (wireless digital telecommunications system (DECT) for example) with a set of remote units 13-i (i = 1, ..., n) located within its coverage zone, a point-to-multipoint communications system being formed with a DECT last mile.

Generally, the remote units 13-1, ..., 13-n comprise communications ports that accept different interfaces, like for example an Ethernet interface.

To an Ethernet port, corresponding to a remote unit 13-i, is connected a local area network (LAN) formed by a plurality of terminal stations 14-j (j = 1, ..., m), which compete for access to a physical medium.

A remote unit 13-i can have one or more ports declared with Ethernet category, i.e. there are several LANs connected to one remote unit 13-i.

The LANs are characterised in that they are systems with very intensive burst traffic. These bursts can transport TCP/IP (Transmission Control Protocol/ Internet Protocol) asymmetric traffic, a very high capacity communication in one of the directions, frequently the downlink direction.

When, on the initiative of a user 14-j of a LAN, a data transaction setup process is started, the remote unit 13-i to which he is connected, tries to obtain a radio channel (traffic channel) by means of his medium access control (MAC) layer.

To this end, an access request message is sent to the MAC medium of the fixed unit 12, to which this unit 12 answers with the traffic channel confirmation. The connection (duplex channel) set up for data is identified with an LCN (Logic Connection Number) identity, memorised together with the DECT (IPUI) identity of the remote unit 13-i that initiated the data transaction.

Once the traffic channel by means of the MAC protocol is established, and given the characteristics of burst traffic, the data link control DLC layer of the fixed unit 12 can decide to suspend or interrupt the MAC connection (physical layer) if there is no data traffic (implying the release of the radio channels), while the digital link is maintained set up. Once the traffic is resumed, the MAC and DLC links are quickly reactivated, respectively.

When the fixed unit 12 returns the first acknowledgement message originated in the destination, this acknowledgement message incorporates the IP address (network layer) which originated the transaction, but not the Ethernet MAC (physical layer) address of the remote unit 13-i, corresponding to the user 14-j of the local area network LAN from which the data transaction was originated.

Each device connected to a LAN has an address to operate at network level and another address to operate at physical level, IP address and MAC address, respectively.

As a result, the fixed unit 12 ought to transmit a paging message to all the remote units 13-1, ..., 13-n with Ethernet ports for them to reactivate their disabled radio channels, for the purpose of being able to send an ARP (address resolution protocol) message.

To avoid the transmission of the ARP request message, including the IP address of the data terminal station which initiated the transaction, to all the remote units 13-1, ..., 13-i registered in a fixed unit 12, for initiating the hunt for a free radio channel, and for reactivating the signalling with the fixed unit 12 over it, the latter unit 12 segments the ARP request message into various segments of a predetermined number of bits, 36 bits for example.

Each one of these segments, duly numbered, is inserted into the broadcast or paging data and transmitted over the pilot channel, for example inside the signalling field A, by the fixed unit 12.

The different segments of the ARP request message are sent in successive frames of the pilot channel, for example in frame number 8 of the multiframe formed by 16 frames, or alternatively, in the paging channels, with a specific discriminator.

The segments into which the ARP request has been divided are added to the header of the ESCAPE marker (if they are sent in the broadcast field B), for indicating to the MAC medium of the remote unit 13-i that it is an ARP request message. If they are sent as paging messages, they are distinguished with a specific discriminator.

The pilot channel is picked up by all the remote units 13-1, ..., 13-n and only the remote unit 13-i that identifies as its own the IP address contained in the ARP request message, shall reactivate the previously interrupted traffic channel, continuing the data transaction over this traffic channel, with the acknowledgement message which now includes the MAC address of the remote unit 13-i in question.

The rest of the messages that make up the transaction are addressed solely to this remote unit 13-i and contain its individual MAC address.

The purpose of the invention, is thus to load the ARP request message into the pilot channel, be this inside a paging message or inside the broadcast data, thereby avoiding the capture of radio channels for receiving these ARP request messages by the remote units 13-1, ..., 13-n that will not recognise their IP address, and for which the employment of radio resources will have been needless.

## Claims

1. - **Method for data addressing in a local area network**, LAN, connected through a communications port to a remote unit (13-i), which is connected by radio to a fixed unit (12) thereby obtaining access to a data communications network via an access point (11) to said network; **characterised in that** it comprises the steps of segmenting an address resolution protocol, ARP, request message containing the IP address of a terminal station (14-j) which originated a data transaction and that belongs to said local area network, LAN, into a plurality of message segments of a predetermined number of bits; and marking the header of each of the message segments with a specific marker that identifies the message segments as belonging to an address resolution protocol, ARP, request message; and transmitting said message segments in successive data transmissions over a radio channel which is picked up by all remote units within the coverage area of the fixed unit in a systematic manner.

2. - **Method for addressing** according to claim 1, **characterised in that** it further comprises the steps of inserting the different marked message segments into broadcast data in successive transmissions; transmission of said broadcast data over said radio channel to the set of remote units (13-1, ..., 13-n) that are inside the coverage area of said fixed unit (12); reception of the broadcast data by said remote units (13-1, ..., 13-n); assembling the different message segments for obtaining said address resolution protocol, ARP, request message; reactivating or setting up a radio channel for completing the connection on the part of the remote unit (13-i) that identifies as its own the IP address contained in said address resolution protocol, ARP, request message; and resuming the data transaction over the connection.

3. - **System for data addressing in a local area network**, LAN, interconnected to a data communications network by means of a radiocommunications system, **characterised in that** it comprises at least one fixed unit (12) including segmentation means for segmenting an address resolution protocol, ARP, request message containing the IP address of a terminal station (14-j) originator of a data transaction and which belongs to said local area network, LAN, into a plurality of message segments of a predetermined number of bits; marking means for marking the header of each of the message segments with a specific marker that identifies the message segments as belonging to an address resolution protocol, ARP, request message; insertion means for inserting the different marked message segments into broadcast data in successive transmissions; and transmission means for transmitting said broadcast data over a radio channel to the set of remote units (13-1, ..., 13-n) that are inside the coverage area of said fixed unit (12), said radio channel being picked up by all the remote units in a systematic manner.

4. - **System for addressing** according to claim 3, **characterised in that** it comprises at least one remote unit (13-i), including reception means for receiving said broadcast data over said radio channel; assembly means for assembling the different message segments for obtaining said address resolution protocol, ARP, request message; reactivation means for reactivating or setting up a radio channel for completing the connection on the part of said remote unit (13-i) that has identified as its own the IP address contained in said address resolution protocol, ARP, request message.

## Patentansprüche

1. - **Verfahren zur Datenadressierung in einem lokalen Netzwerk**, LAN, das durch einen Kommunikationsport mit einer Ferneinheit (13-i) verbunden ist, die per Funk mit einer Festeinheit (12) verbunden ist, wodurch über einen Zugangspunkt (11) zum Netzwerk Zugang zu einem Datenkommunikationsnetz erlangt wird; **dadurch gekennzeichnet, dass** es die folgenden Schritte umfasst; Segmentieren einer Adressauflösungsprotokoll-Anforderungsmitteilung, ARP-Anforderungsmitteilung, die die IP-Adresse einer Endgerätestation (14-j) enthält, die eine Datentransaktion veranlasste und die zum lokalen Netzwerke LAN, gehört, in mehrere Mitteilungssegmente einer vorgegebenen. Anzahl von Bits und Markieren der Anfangskennungen jedes der Mitteilungsegmente mit einer speziellen Markierung, die die Mitteilungssegmente als zu einer Adressauflösungsprotokoll-Anforderungsmeldung, ARP-Anforderungsmeldung gehörend identifiziert; und Senden der Meldungssegmente in aufeinander folgenden Datenübertragungen über einen Funkkanal, der durch alle Ferneinheiten innerhalb des Abdeckungsgebiets der Festeinheit in einer systematischen: Art und Weise aufgenommen wird.

2. - **Verfahren zur Adressierung** nach Anspruch 1, **dadurch gekennzeichnet, dass** es ferner die folgenden Schritte umfasst; Einsetzen unterschiedlich markierter Mitteilungssegmente in Rundsendedaten in aufeinander folgenden Übertragungen; Übertragung der Rundsendedaten über den. Funkkanal an die Menge von Ferneinheiten (13-1, ..., 13 -n) die innerhalb des Abdeckungsgebiets der Festeinheit (12) sind; Empfang der Rundsendedaten durch die Ferneinheiten (13-1, ..., 13-n); Zusammensetzen der unterschiedlichen zum Erlangen der Adressauflösungsprotokoll-Anforderungsmitteilung, ARP-Anforderungsmitteilung; Reaktivieren oder Einrichten eines Funkkanals zum Vervollständigen der Verbindung seitens der Ferneinheit (13-i), die die IP-Adresse als ihre eigene identifiziert, die in der Adressauflösungsprotokoll-Anforderungsmitteilung, Anforderungsmeidung enthalten ist; und Wiederaufnehmen der Datentransaktion über die Verbindung.

3. - **System, zur Datenadressierung in einem lokalen Netzwerk**, LAN, das mittels eines Funkkommunikationssystems mit einem Datenkommunikationsnetz verbunden ist, **dadurch gekennzeichnet, dass** es umfasst: mindestens eine Festeinheit (12), beinhaltend Segmentierungsmittel zum Segmentieren einer Adressauflösungsprotokoll-Anforderungsmeldung, ARP-Anforderungsmitteilung, die die IP-Adresse eines Endgerätestation-(14-j)-Veranlassers einer Datentransaktion enthält und der zum lokalen Netzwerk, LAN, gehört, in mehrere Mitteilungssegmente einer vorgegebenen Anzahl von Bits; Markierungsmittel zum Markieren der Anfangskennungen jedes der Mitteilungssegmente mit einer speziellen Markierung, die die Mitteilungssegmente als zu einer Adressauflösungsprotokoll-Anforderungsmeldung, ARP-Anforderungsmeldung gehörend identifiziert; Einsetzmittel zum Einsetzen der unterschiedlich markierten Mitteilungssegmente in Rundsendedaten in aufeinander folgenden Übertragungen und Übertragungsmittel zum Übertragen der Rundsendedaten über einen Funkkanal an die Menge von Ferneinheiten (13-1, ..., 13-n), die innerhalb des Abdeckungsgebiets der Festeinheit (12) sind, wobei der Funkkanal von allen Ferneinheiten in systematischer Art und Weise aufgenommen wird.

4. - **System zur Adressierung** nach Anspruch 3, **dadurch gekennzeichnet, dass** es mindestens umfasst : eine Ferneinheit (13-i), beinhaltend Empfangsmittel zum Empfangen der Rundsendedaten über den Funkkanal; Zusammensetzmittel zum Zusammensetzen der unterschiedlichen Mitteilungssegmente zum Erlangen der Adressauflösungsprotokoll-Anforderungsmitteilung, ARP-Anforderungsmeldung; Reaktivierungsmittel zum Reaktivieren oder Einrichten eines Funkkanals zum Vervollständigen der Verbindung seitens der Ferneinheit (13-i), die die IP-Adresse als ihre eigene identifiziert hat, die in der Adressauflösungsprotokoll-Anforderungsmitteilung, ARP-Anforderungsmeldung enthalten ist,

## Revendications

1. **Procédé d'adressage de données dans un réseau local,** LAN, connecté par le biais d'un port de communications à une unité distante (13-i), qui est connectée par radio à une unité fixe (12) obtenant ainsi l'accès à un réseau de communications de données par l'intermédiaire d'un point d'accès (11) audit réseau; **caractérisé en ce qu'**il comprend les étapes de segmentation d'un message de requête de protocole de résolution d'adresse, ARP, contenant l'adresse IP d'un poste terminal (14-j) qui a lancé une transaction de données et qui appartient audit réseau local, LAN, en une pluralité de segments de message d'un nombre prédéterminé de bits ; et de marquage de l'en-tête de chacun des segments de message par un marqueur spécifique qui identifie les segments de message comme appartenant à un message de requête de protocole de résolution d'adresse, ARP ; et de transmission desdits segments de message lors de transmissions de données successives sur un canal radio qui est capté par toutes les unités distantes dans la zone de couverture de l'unité fixe de façon systématique.

2. **Procédé d'adressage** selon la revendication 1, **caractérisé en ce qu'**il comprend en outre les étapes d'insertion des différents segments de message marqués dans des données de diffusion lors de transmissions successives ; de transmission desdites données de diffusion sur ledit canal radio à l'ensemble d'unités distantes (13-1, ..., 13-n) qui se trouvent à l'intérieur de la zone de couverture de ladite unité fixe (12) : de réception des données de diffusion par lesdites unités distantes (13-1, ..., 13-n) ; d'assemblage des différents segments de message pour obtenir ledit message de requête de protocole de résolution d'adresse, ARP ; de réactivation ou d'établissement d'un canal radio pour terminer la connexion de la part de l'unité distante (13-i) qui identifie comme sa propre adresse l'adresse IP contenue dans ledit message de requête de protocole de résolution d'adresse, ARP ; et de reprise de la transaction de données sur la connexion.

3. **Système d'adressage de données dans un réseau local**, LAN, interconnecté à un réseau de communications de données au moyen d'un système de radiocommunications, **caractérisé en ce qu'**il comprend au moins une unité fixe (12) comportant un moyen de segmentation pour segmenter un message de requête de protocole de résolution d'adresse, ARP, contenant l'adresse IP d'un poste terminal (14-j) qui a lancé une transaction de données et qui appartient audit réseau local, LAN, en une pluralité de segments de message d'un nombre prédéterminé de bits un moyen de marquage pour marquer l'entête de chacun des segments de message par un marqueur spécifique qui identité les segments de message comme appartenant à un message de requête de protocole de résolution d'adresse, ARP; un moyen d'insertion pour insérer les différents segments de message marques dans des données de diffusion lors de transmissions successives ; et un moyen de transmission pour transmettre lesdites données de diffusion sur un canal radio a l'ensemble d'unités distantes (13-1, ..., 13-n) qui se trouvent à l'intérieure de la zone de couverture de ladite unité fixe (12), ledit canal radio étant capté par toutes les unités fixes de façon systématique.

4. **Système d'adressage** selon la revendication 3, **caractérisé en ce qu'**il comprend au moins une unité distante (13-i), comportant un moyen de réception pour recevoir lesdites données de diffusion sur ledit canal radio, un moyen d'assemblage pour assembler les différents segments de message pour obtenir ledit message de requête de protocole de résolution d'adresse, ARP ; un moyen de réactivation pour réactiver ou établir un canal radio pour terminer la connexion de la part de ladite unité distante (13-i) qui a identifié comme sa propre adresse l'adresse IP contenue dans ledit message de requête de protocole de résolution d'adresse, ARP.
